(19) **Europäisches Patentamt**
**European Patent Office**
**Office européen des brevets**

(11) **EP 1 824 345 B1**

(12) **EUROPEAN PATENT SPECIFICATION**

(45) Date of publication and mention
of the grant of the patent:
**02.03.2011 Bulletin 2011/09**

(51) Int Cl.:
***A23C 9/156*** (2006.01)　　***A23G 9/28*** (2006.01)

(21) Application number: **05808599.4**

(86) International application number:
**PCT/IB2005/003640**

(22) Date of filing: **24.10.2005**

(87) International publication number:
**WO 2006/046151 (04.05.2006 Gazette 2006/18)**

(54) **MULTILAYER FRESH MILK PRODUCT CONTAINING PIECES OF CHOCOLATE OR A CHOCOLATE-LIKE PRODUCT, AND METHOD FOR PRODUCING SAME**

SCHOKOLADENSTÜCKCHEN ODER EIN SCHOKOLADENARTIGES PRODUKT ENTHALTENDES MEHRSCHICHTIGES FRISCHMILCHPRODUKT UND HERSTELLUNGSVERFAHREN DAFÜR

PRODUIT LAITIER FRAIS MULTICOUCHE CONTENANT DES MORCEAUX DE CHOCOLAT OU UN PRODUIT DE TYPE CHOCOLAT ET PROCEDE DE PRODUCTION DUDIT PRODUIT LAITIER

(84) Designated Contracting States:
**AT BE BG CH CY CZ DE DK EE ES FI FR GB GR HU IE IS IT LI LT LU LV MC NL PL PT RO SE SI SK TR**

(30) Priority: **25.10.2004 FR 0411340**
**26.10.2004 US 621677 P**

(43) Date of publication of application:
**29.08.2007 Bulletin 2007/35**

(73) Proprietor: **Compagnie Gervais Danone**
**75009 Paris (FR)**

(72) Inventors:
• **RABAULT, Jean-Luc**
**F-91650 Breuillet (FR)**

• **PICK, Gérard**
**F-91400 Orsay (FR)**

(74) Representative: **Warcoin, Jacques et al**
**Cabinet Régimbeau**
**20, rue de Chazelles**
**75847 Paris Cedex 17 (FR)**

(56) References cited:
**EP-A- 0 770 332　　EP-A- 0 781 510**
**WO-A-00/70960　　WO-A-2004/008867**
**WO-A-2004/068958　　DE-A1- 4 117 921**
**US-A- 4 874 618　　US-A- 5 820 913**
**US-A- 6 068 865**

**Description**

The present invention relates to a multilayer fresh milk product containing a layer of pieces of chocolate or a chocolate-like product, and to the method for preparing same.

The use of pieces of chocolate or chocolate-like product layered in fresh milk products poses technical problems that are very different from those conventionally encountered in other food areas (chocolate making, confectionery, cookie production, ice cream, etc.). In particular, the following problems are involved:

- microbiological contamination: certain molds, yeast and vegetative bacteria naturally present in chocolate develop on contact with the water content of the fresh milk product. It is necessary to sterilize or pasteurize the chocolate; however, conventional pasteurization scales are ineffective on chocolate, because of its low Aw. In addition, the materials and methods used must be ultra-clean in order to prevent bacterial contamination or re-contamination;
- poor water resistance: a standard chocolate is soft after 5 hours in a yoghurt. However, it is necessary for the chocolate to keep its crunchiness.

Fresh milk products that contain pieces of unpasteurized chocolate (conventional chips, filled or not filled) are known in the prior art. However, in this case, preserving agents must be used or the shelf-lives of these milk products are short (< 12 days).

Patent application WO 00/70960 describes a solid chocolate or chocolate-like product, advantageously in the form of a continuous or discontinuous layer or of chocolate pieces, that can be brought into contact with a wet mass such as a milk base. However, nothing is specified regarding the method for prepaying such compositions. Moreover, standard chocolate (i.e. chocolate which has not undergone thermal decontamination) is contaminated; now, nothing is suggested with regard to the need to pasteurize or sterilize the chocolate in order to prevent microbiological problems due to the contact with the fresh milk products, thus making it possible to avoid preserving agents, nor with regard to the manner in which recontaminations can be prevented when the pasteurized or sterilized chocolate is introduced into and crystallized in a fresh milk product, i.e. with regard to the manner in which this pasteurized state can be maintained until the product reaches the consumer, nor even until the product is packaged.

Patent application EP 770 332 describes a multilayer fresh milk product comprising continuous layers of chocolate, and not discontinuous layers or chocolate pieces. The product obtained is not therefore optimal: either the continuous layer is thick and crunchy, but is more difficult to spoon (poor "spoonability") because the continuous layer of chocolate must be broken; or the continuous layer is thin and it then rapidly rehydrates and is not crunchy. On the other hand, discontinuous layers of chocolate can be thicker than continuous layers, which makes them crunchier without impairing spoonability. In addition, the method used in that document requires spraying of the chocolate, which is not very compatible with the hygiene of laminar flow hoods (above the metering devices) and with placing covers on the pots.

Patent application EP 664 959 describes fresh milk products that may contain chocolate pieces or a continuous layer of chocolate. Now, that document does not specify the need to pasteurize or sterilize the chocolate in order to prevent microbiological problems due to the contact with the fresh milk products, thus making it possible to avoid using preserving agents.

Furthermore, it does not mention the possibility of obtaining a discontinuous layer of chocolate. Now, the use of a discontinuous layer of chocolate that has sufficient cohesion (grid type) makes it possible to produce a good compromise between, firstly, the requirement relating to the crunchy nature and, secondly, the requirement relating to the ease with which the content can be spooned ("spoonability"). In addition, discontinuous layers of chocolate can be thicker than continuous layers, which makes them crunchier without impairing spoonability.

Patent WO 00/07456 describes a method for sterilizing chocolate or a chocolate-like product that makes it possible to minimize the organoleptic damage thereto. This chocolate or chocolate-like product can then be used in fresh milk products in the form of chips or of a discontinuous layer. However, that patent does not describe the method for preparing a fresh milk product containing chocolate chips or chips of a chocolate-like product. Moreover, nothing is indicated regarding the way in which the chocolate or the chocolate-like product is kept crunchy, nor how to conserve the sterilized state without recontamination until the final metering into the pot.

Surprisingly, the inventors of the present application have discovered that it is possible to obtain a multilayer, acidic (advantageously having a pH < 4.8, advantageously between 3 and 4.8) or neutral (advantageously having a pH of between 4.8 and 7.3, advantageously between 5.5 and 6.8) fresh milk product containing at least one layer of chocolate pieces and having a shelf life of between 12 days and 6 weeks at a temperature of between 1 and 10°C, by implementing a method of injecting the liquid chocolate directly into the pot. The chocolate solidifies directly on contact with the cold fresh milk product and the chocolate does not require subsequent milling.

This method prevents recontamination at all stages until consumption, and is less expensive (in terms of investment and operating costs), more flexible and more productive than those proposed in the state of the art.

Moreover, the chocolate pieces keep their crunchiness throughout the shelf life of the milk product, without requiring the use of preserving agents.

In addition, by virtue of this original method, the microbiological stability of the layer of chocolate pieces in contact with the acidic fresh milk product is ensured with pasteurization or sterilization of the chocolate.

In the case of use of the chocolate in an acidic fresh milk product (the milk base having been pasteurized before the fermentation or acidification by ingredients), it is sufficient to pasteurize the chocolate (no need to sterilize, since the sporulated bacteria do not grow at pH < 4.8/0 to 10°C/30 days). It is also possible, less advantageously, to use a sterile chocolate, but this is not necessary.

In fact, the advantages of simple pasteurization compared with sterilization are as follows:

1. It is much easier to pasteurize chocolate than to sterilize it.

2. It is possible to pasteurize the piping dry, with chocolate in certain cases (whereas, in the sterile version, in-place cleaning, sterilizing with hot water or with steam, and then drying must be carried out).

3. There is better control of recontamination. In addition, in the event of accidental contamination, there is no substantial pathogenic risk (essentially the appearance of a modifying flora).

For use of the chocolate in a neutral fresh milk product, the chocolate and the milk base must be sterilized. A chocolate or a milk base that have only been pasteurized cannot be used.

In addition, by virtue of this innovative method, the milk base is not subjected to any shear, and there is therefore no mixing of the chocolate, once injected, with the milk base and no deterioration of the texture of the fresh milk product due to the chocolate being cut or mixed within it.

Moreover, since liquid chocolate is injected into the pot, it is possible to obtain large or fragile chocolate pieces, which could not have been obtained by cutting the chocolate into pieces using the methods that currently exist, and especially which could not have been metered solid without blockage or without breakage.

Finally, it is possible to localize the chocolate in a precise place in the multilayer milk product, so as to create texture contrasts, surface decoration, or a surprise effect (hidden chocolate).

The present invention therefore relates to a method for producing a multilayer, acidic or neutral fresh milk product comprising at least one layer of chocolate pieces which method comprises the following successive steps:

a) pasteurization of the chocolate having a fat content of between 43 and 85% by weight with a pasteurization strength $F_z$ of between 6000 and 10 000 000 min, advantageously between 10 000 and 500 000 min, even more advantageously between 15 000 and 100 000 min,
or sterilization of the chocolate having a fat content of between 43 and 85% by weight;

b) cooling of the pasteurized or sterilized chocolate to a temperature of between 24 and 45°C, advantageously between 24 and 38°C, advantageously between 33 and 38°C;

c) in an environment in which the microorganisms are filtered out, injection of a stream of pasteurized or sterilized, acidic or neutral milk base having a temperature of between "its freezing point +1°C" and 12°C, advantageously between "its freezing point + 1°C" and 6°C and of a discontinuous stream of pasteurized or sterilized, cooled chocolate, into a thermoformed or preformed decontaminated pot;

d) placing a cover on the pot containing a multilayer, acidic or neutral fresh milk product containing at least one layer of pieces of pasteurized or sterilized chocolate having a fat concentration of between 43 and 85% by weight, said product being conserved at a temperature of between 1 and 10°C for a period of between 12 days and six weeks.

For the purpose of the present invention, the term "acidic or neutral milk base" or "acidic or neutral milk product" is intended to mean any milk product fermented or acidified via ingredients (advantageously by lactic acid, citric acid or phosphoric acid), having an acidic pH (its pH is advantageously less than 4.8, it is advantageously between 3 and 4.8) or neutral pH (its pH is advantageously between 4.8 and 7.3, advantageously between 5.5 and 6.8). In particular, it may be a fromage frais or a fermented product containing live ferments (for example, sour cream, kefir, or the like) and in particular a yoghurt or similar fermented milk specialty products (fermented with lactic acid bacteria, such as active bifidus or L. casei). Advantageously, the neutral milk base is a mousse. It is advantageously a stirred yoghurt. Advantageously, the product is fermented by the addition of live ferments such as, for example, *Lactobacillus bulgaricus, Streptococcus thermophilus* and/or *Lactobacillus acidophilus* and/or *bifidus.*

Advantageously, the milk used in the milk base is cow's milk. However, other milks can be used as a total or partial replacement of the cow's milk, for instance goat's milk, ewe's milk, buffalo milk or mare's milk, or less advantageously milks of plant origin, such as soya milk, coconut milk or oat milk.

The pasteurized or sterilized, and optionally fermented, acidic or neutral milk base is obtained according to methods well known to those skilled in the art. In particular, the method for obtaining a fermented pasteurized acidic milk base comprises the following successive steps:

- homogenization of the milk base,
- pasteurization of the milk base,
- cooling of the milk base,
- seeding,
- fermentation to the desired acidity.

Briefly, the method begins with raw milk which may also contain a combination of whole milk, skimmed milk, condensed milk, dry milk (defatted dry extract of milk or equivalent), category A lactoserum, cream and/or other milk fraction ingredients, such as, for example, buttermilk, lactoserum, lactose, lactalbumin, lactoglobulin, or lactoserum modified by complete or partial removal of lactose and/or minerals or other milk ingredients so as to increase the defatted solid content, which are mixed so as to provide the desired fat and solid contents. Although not preferred in the context of the present invention, the milk base may contain a filling milk constituent, i.e. a milk ingredient of which a portion consists of a non-milk ingredient, for instance an oil or soya milk.

By extension also, the pasteurized or sterilized, acidic or neutral sweetened aqueous preparations used in contact with the milk base will be considered as equivalent to the acidic or neutral milk base. Thus, the metering and the crystallization of the chocolate in the sweetened aqueous preparation, itself in contact with the milk base (which may be deposited onto it in bilayers) are also part of the invention.

For the purpose of the present invention, the term "layer of chocolate pieces" is intended to mean any layer containing solid chocolate pieces that are isolated (chips, filaments, etc) or connected to one another in larger discontinuous structures so as to form a discontinuous layer or discontinuous three-dimensional structures.

For the purpose of the present invention, the term "discontinuous layer of chocolate" is intended to mean any layer of chocolate pieces connected to one another and comprising holes that reveal the lower layer of product. This layer is not therefore continuous.

Advantageously, the layer of chocolate pieces is a discontinuous layer of chocolate.

For the purpose of the present invention, the term "chocolate" is intended to mean chocolate and chocolate-like products.

For the purpose of the present invention, the term "chocolate-like product" is intended to mean any confectionery fatty mass, with a water content < 4% by weight (before being brought into contact with an aqueous product), containing a continuous fatty phase consisting of one or more fats of vegetable or animal origin and whose properties are similar to those of cocoa butter (crunchy texture). These fatty masses are generally called coating chocolate or compound.

This chocolate or this chocolate-like product can be flavored with caramel, with coffee, with mint, etc., as a supplement or as a substitution for the cocoa.

In an advantageous embodiment of the invention, the chocolate comprises between 65 and 78% by weight of fat (advantageously between 65 and 69% of fat), advantageously between 68 and 78% by weight of fat, advantageously between 74% and 76% by weight of fat, relative to the total weight of the chocolate. In general, the fat is cocoa butter. It is, however, possible to replace up to 20% by weight of the cocoa butter with anhydrous milk fat (AMF) or to replace all or some of the cocoa butter with one or more vegetable fats having an SFC at 10°C (solid fat content) of greater than 50% by weight. In the case of the chocolate-like products, the fat can also be solely a fat of vegetable origin, in particular lauric fats: for example, hydrogenated fractionated palm kernel oil (sold by Fuji Oil Europe). These lauric fats should not be combined with cocoa butter for reasons of crystallization (eutectic) incompatibility. The cocoa butter contained in cocoa powder (10-12% fat) is, however, tolerated, but care will be taken to maintain the cocoa butter/total fat ratio at preferably < 5%, so as to maximize the crunchiness.

Very high fat chocolates are unstable: there is rapid sedimentation due to the low viscosity, hence a heterogeneity in the recipe, and therefore a heterogeneity in the taste and in the water resistance. Preferably, the chocolate purchased will have a low fat content, so as to have a viscosity > 0.5 Pa.s at 40°C (according to the "Casson" method, OICC No. 10 (1973)), and the remainder of the fat content will be adjusted at the site of pasteurization. This prevents settling out in transport tankers that do not have stirring, for example.

In an advantageous embodiment of the invention, the chocolate has a sugar concentration of greater than 5% by weight, advantageously greater than 10% by weight, even more advantageously greater than 11% by weight, relative to the total weight of the chocolate. Advantageously, this sugar content is approximately 14% by weight, relative to the total weight of the chocolate. The sugars are in particular monosaccharides and disaccharides. Among monosaccharides, mention may be made of fructose, galactose or glucose. Among disaccharides, mention may in particular be made of sucrose, which is the sugar commonly used for producing chocolate, but the sucrose can be partially or completely replaced with another disaccharide, such as lactose, for example in an amount of 0 to 50% by weight, or with polyols which, at the jacket temperature during the pasteurization or sterilization step, do not melt and do not release crystallization water. These are, for example, mannitol and maltitol. The preferred variant is, however, sucrose.

In a particular embodiment of the invention, the chocolate has a parameter ($\tau$) less than 3, advantageously less than 2, advantageously less than 1, the parameter ($\tau$) being defined by the following equation (1) :

$$\tau= (-[water] + 0.37) \times F + (5.25 \times [water] - 1.67) \times (S+SMP) + (26.2 \times [water] - 9.6) \times C + (61 \times [water] - 14.5) \times (S+SMP) \times C,$$

with:

- [water] is the local free water content of the acidic or neutral.milk base (in g/g),
- F is the fat content of the chocolate (in g/g),
- S + SMP is the content of sugars + skimmed milk powder of the chocolate (g/g),
- C is the content of dry and defatted cocoa of the chocolate (in g/g).

The local free water content [local free water] is defined by the following equation (2):

$$[local\ free\ water] = [total\ water] \times A_{w\ 25°C} / (100-FM)$$

in which:

[local free water] is given in grams of water per gram of acidic or neutral milk base;
FM is the fat of the acidic or neutral milk base, expressed in grams of fat per 100 grams of acidic or neutral milk base;
[total water] is given in grams of water per 100 grams of acidic or neutral milk base.

For example, for a non-fat wet base containing 77% of water and having an $A_{w\ 25°C}$ of 0.96, the local free water content is 73.9%.

An acidic or neutral milk base has a local free water content of between 45 and 88%.

For an application with a small thickness of chocolate (< 3 mm), it is necessary that $\tau$ < 2. The thinner the thickness of the chocolate, the lower $\tau$ must be in order for the chocolate to keep its crunchiness.

Thus, according to the desired thickness of the chocolate pieces, the value of $\tau$ must not exceed a limiting value in order to ensure water resistance and therefore a crunchiness that is sufficient. The greater the thickness, the higher the limiting value of $\tau$ may be. For this reason, those skilled in the art will be in a position to choose the optimal composition of the chocolate according to the desired thickness. Similarly, the value of $\tau$ will have to be chosen according to the duration of conservation and the temperature of conservation of the multilayer, acidic or neutral fresh milk product. The shorter the duration or the lower the temperature, the higher this value may be. In general, $\tau$ is advantageously less than 2, preferably less than 1.6.

The composition of the chocolate having the appropriate characteristics in the context of the present invention is therefore defined in particular by means of a test described in the form of a mathematical equation which means that those skilled in the art do not have to carry out experiments. However, where required, an experimental procedure that allows those skilled in the art to determine the chocolate compositions which satisfy the aims that the invention proposes to achieve is indicated below.

For example, the test which consists in bringing slices of chocolate 1.5 $\pm$ 0.2 mm thick and 20 mm in diameter into contact with an agar gel having a determined local free water content of 74% is carried out. The chocolate slices are obtained after tempering and cooling of the chocolate to 13°C, and storage for 2 days at 20°C and then for 12 hours at 10°C. The gel is poured into syringes which are cut at their end and then covered with the slice of chocolate and are then closed again with a stopper. The whole is stored for 35 days at 10°C and the water uptake of the slice of chocolate is measured at D35 by the "Karl Fischer" method, OICC No. 105 (1988).

The compositions which satisfy the criteria of the invention are those whose percentage water uptake after 35 days of storage at 10°C will be < 17.7%; table 1 below gives an indication of the percentages of water uptake after 35 days at 10°C as a function of the water resistance of the chocolate.

*Table 1: Percentages of water uptake in g/100 g after 35 days at 10°C as a function of the water resistance of the chocolate*

| % water uptake | Water resistance |
|---|---|
| > 17.7 | no resistance |
| 11.8 to 17.7 | average resistance |
| 5.9 to 11.8 | good resistance |
| < 5.9 | very good resistance |

A gel composition having a local free water content of approximately 74% is given below in table 2.

*Table 2: % composition, by weight, of gel having a local free water content of approximately 74%*

| Water | 77% |
|---|---|
| Sucrose | 8% |
| Dextrose monohydrate | 13% |
| Agar | 1.5% |
| Potassium sorbate | 0.5% |
| 80% lactic acid | Qs for pH 4.0 |
| Total | 100 |

The chocolate used in the context of the present invention may be dark chocolate, milk chocolate or white chocolate.

In the case of milk chocolate or white chocolate, some or all of the dry and defatted cocoa is replaced with skimmed or non-skimmed powdered milk.

Advantageously, the composition of the chocolate according to the present invention is such that DDC/(S+SMP) is < 2.3, advantageously less than 1.6, even more advantageously less than 1 (DDC = content of dried defatted cocoa of the chocolate (in g/g), S+SMP = content of sugar + skimmed milk powder of the chocolate (in g/g)).

Moreover, in the case of the use of other milk powder derivatives (lactoserum, buttermilk, permeate, lactoprotein, etc.), their non-fat component will be counted as "SMP" in the above formulae. In a non advantageous variant, polyols or other filling sweeteners can be substituted for the sugar and are then counted as sugars (S) in the above formulae.

All the water-resistant chocolate formulae described in patent application WO 00/70960 can be used in the context of the present invention.

Advantageously, the chocolate used in the context of the present invention corresponds to the formulae indicated in table 3 below:

*Table 3: % composition, by weight, of the chocolate formulae*

| Ingredients | Formula 1 | Formula 2 |
|---|---|---|
| % cocoa mass | 5.40 | 9.80 |
| % dark chocolate | 28.28 | 28.28 |
| %-cocoa powder containing 11% by weight of fat | 2.30 | |
| % cocoa butter | 64.02 | 61.92 |
| Total | 100.00 | 100.00 |
| % fat | 74.99 | 74.98 |
| % defatted cocoa | 11.01 | 11.02 |
| % sugar | 14.00 | 14.00 |
| Total fat + defatted cocoa + sugar | 100.00 | 100.00 |

(continued)

| Ingredients | Formula 1 | Formula 2 |
|---|---|---|
| % water | 0.33 | 0.31 |
| Dry defatted cocoa/sugar | 0.786 | 0.787 |

In these formulae:

- the cocoa mass contains, as % by weight: 1.7% water, 53.4% fat and 44.95% dry defatted cocoa; its water content is < 1%, the particle size thereof is advantageously fine (minimum 90% of particles < 20 μm; maximum 0.2% of particles > 75 μm) and the contamination thereof is advantageously of the order of 1000 cfu/g;
- the dark chocolate contains, as % by weight: 0.5% water, 27.7% fat (approximately 0.3% of which is lecithin), 22.3% dry defatted cocoa and 49.5% sugar; advantageously, the particle size thereof measured with a Palmer is < 30 μm, and the contamination thereof is of the order of < 1000 cfu/g;
- the cocoa powder containing 11% fat contains, as % by weight: 4% water, 11% fat and 85% dry defatted cocoa.

Advantageously, these three constituents, along with the cocoa butter, are sold by the company Barry-Callebaut.
Advantageously, the chocolate-like product used in the context of the present invention corresponds to the formulae indicated in table 4 below:

*Table 4: % composition, by weight, of the chocolate-like product formulae*

| Ingredients | Formula 3 | Formula 4 |
|---|---|---|
| % lauric dark chocolate-like product (recipe 1) | 31.8 | |
| % lauric dark chocolate-like product (recipe 2) | | 37.84 |
| % cocoa powder, basified at pH 7.5, containing 11% by weight of fat | 4.00 | |
| % hydrogenated and fractionated vegetable fat (HPKS) | 64.20 | 62.16 |
| Total | 100.00 | 100.00 |
| % fat | 74.98 | 74.99 |
| % defatted cocoa | 11.02 | 11.00 |
| % sugar | 13.99 | 14.00 |
| Total fat + defatted cocoa + sugar | 99.99 | 99.99 |
| % water | 0.49 | 0.50 |
| Dry defatted cocoa/sugar | 0.787 | 0.786 |

The composition of the recipes of the lauric chocolate-like products is given in table 5 below. Advantageously, the particle size thereof measured with a Palmer is < 30 μm, and the contamination thereof is preferably < 1000 cfu/g.

*Table 5: % composition, by weight, of the recipes of the lauric dark chocolate-like products*

| Ingredients | Recipe 1 | Recipe 2 |
|---|---|---|
| % hydrogenated and fractionated vegetable fat (HPKS) | 29.45 | 30.14 |
| % cocoa powder, basified at pH 7.5, containing 11% by weight of fat | 26.35 | 32.66 |
| % sugar | 44 | 37 |
| % lecithin | 0.2 | 0.2 |
| Total | 100.00 | 100.00 |
| % fat | 32.5 | 33.9 |
| % defatted cocoa | 22.4 | 27.76 |

(continued)

| Ingredients | Recipe 1 | Recipe 2 |
|---|---|---|
| Dry defatted cocoa/sugar | 0.599 | 0.885 |

The hydrogenated and fractionated vegetable fat used in tables 4 and 5 is hydrogenated palm kernel stearin (i.e. hydrogenated and fractionated). Two advantageous examples are available from Fuji Oil Europe (ref: Palkena H50 G or HB7 G). In particular the solid fat content of these two plant fats is given in table 6 below.

Table 6: **Solid fat content (SFC)** as a proportion of solid fat/total fat (as %) at a given temperature

| | Cocoa butter | HPKS Palkena, Ref H50 G | HPKS Palkena, Ref HB7 G |
|---|---|---|---|
| SFC at 10°C | 84.3 | | |
| SFC at 15°C | 78.4 | | |
| SFC at 20°C | 71 | > 91 | > 90 |
| SFC at 25°C | 62.6 | 82-91 | 73-83 |
| SFC at 30°C | 37.9 | 38-47 | 26-35 |
| SFC at 35°C | 0.8 | < 5 | < 5 |
| SFC at 40°C | 0 | | |

In a particular embodiment of the invention, the method according to the present invention comprises a step ($\alpha$), prior to step (a), consisting of preparation of the chocolate, advantageously by mixing the fat and the chocolate, and optionally the cocoa powder and/or the cocoa mass. Advantageously, the ingredients used are cocoa mass, dark chocolate, cocoa powder containing 11% by weight of fat and cocoa butter in the case of chocolate, and the lauric dark chocolate-like product, hydrogenated and fractionated vegetable fat and cocoa powder 10-12 in the case of the chocolate-like product. Advantageously, the proportions used are those indicated in tables 3 to 5 for formulae 1 to 4 and recepies 1 and 2.

In a particular embodiment of the invention, the chocolate, prepared on site in step ($\alpha$) or purchased, is deaerated under vacuum before it is used in the method according to the present invention (i.e. before step (a) of the method). Such a deaeration can make it possible to obtain a better effectiveness of the thermal treatment and a better water resistance (more compact chocolate). Step (a) of the method according to the present invention therefore consists of pasteurization or sterilization of the chocolate.

In a first variant, the chocolate is therefore pasteurized with a pasteurization strength Fz of between 6000 and 10 000 000 min, advantageously between 10 000 and 500 000 min, even more advantageously between 15 000 and 100 000 min. In this case, step (c) of the method according to the present invention consists of the injection, under microbiologically filtered air, of a stream of pasteurized acidic milk base and of a discontinuous stream of pasteurized, cooled liquid chocolate, into a thermoformed or preformed decontaminated pot.

Surprisingly, for a dark chocolate, no organoleptic degradation occurs with these pasteurization scales.

In 1997, PCSA (Danone Group) modeled the thermo-resistance of *A. niger* spores in artificial contamination in chocolate (< 1% of water) :

- Decimal reduction time D (time necessary to reduce by 90%, i.e. to divide by 10, a population of a given mircoorganism at a given temperature) at 70°C: $D_{70°C}$ = 2000 min; 2000 min at 70°C (reference temperature) are therefore required to destroy the population of A. niger by 90% (i.e. 1/10th or 1 Log).

- Z (increase in temperature in °C which makes it possible to divide D by 10) = 7.65°C; it is therefore necessary to raise the temperature by 7.65°C in order to reduce D 10-fold (therefore $D_{77.65°C}$ = 200).

*A. niger* is one of the most thermoresistant microorganisms of those that must be destroyed during pasteurization. These data are used to calculate the pasteurization strength Fz according to formula (3) below:

$$Fz = time \times 10^{(T-70)/Z}$$

Time = Pasteurization time at T in min

Fz: pasteurization strength in min

T: pasteurization temperature in °C

The effectiveness of pasteurization is then calculated: $EP = Fz/D_{70°C}$, which measures the logarithmic decrease in the population for the given thermal treatment.

For example, Fz = 6000 min can correspond to a thermal treatment of 6000 min at 70°C or 0.72 min at 100°C or 1 min at 98.9°C. These treatments reduce the population of *A. niger* 1000-fold (3 Log). Fz = 10 000 000 min can correspond to a thermal treatment of 13.1 min at 115°C.

In reality, since the temperature is not constant during the thermal treatment, Fz is calculated by time × temperature integration, as is conventionally done in the food preservation industry (appertization).

A little water, preferably in the form of steam, can be injected in order to pasteurize the chocolate during step (a). It may be, for example, a proportion of 0.5 to 1% by weight relative to the total weight of the chocolate. This can make it possible to improve the pasteurization if the starting materials are very contaminated: it is not then necessary to evaporate the water introduced, given the small amounts used.

In an advantageous embodiment, the pasteurization step (a) is carried out dry. Advantageously, this step (a) is carried out by heating, optionally under pressure.

Advantageously, this step (a) comprises the following successive steps:

1. Heating, advantageously using a device equipped with a double-walled jacket, to a temperature > 74°C, advantageously to a temperature of between 90 and 120°C, advantageously to a temperature of approximately 100°C+/-5°C so as to obtain Fz > 6000 min,

2. Cooling to a temperature < 75°C, advantageously using a device equipped with a double-walled jacket.

During the heating in the pasteurization step (a), a little water evaporates into the "overhead of the tank" and it is advantageous (but not strictly necessary) to remove it, in order to increase the water resistance of the chocolate and to limit sugar aggregates. In particular, two solutions can be envisioned for removing this water:

1. If the heating is carried out at atmospheric pressure: the gases and the steam can exit via a sterile filter (or sintered glass);

2. If the heating is carried out under pressure using a device equipped with a closed pasteurization tank, the steam can be degassed just after the end of pasteurization (before cooling) by being placed in the open air and/or by being placed under vacuum.

Option 2 gives a slightly greater effectiveness of pasteurization of the chocolate, but may cause some sugar aggregates in the pasteurized chocolate.

In an advantageous embodiment, the chocolate is pasteurized during step (a) by means of a batch method, advantageously in a device equipped with a pasteurization tank that has a double-walled jacket, advantageously equipped with a stirrer that scrapes the walls.

Advantageously, the heating fluid in the double-walled jacket is hot water (optionally overheated for temperatures > 100°C), steam (in particular for pasteurization temperatures > 100°C) or any other heat-transfer fluid (oil, for example).

Steam allows shorter pasteurization cycle times, since the heating is more rapid than a loop of hot water. Advantageously, the steam pressure in the double-walled jackets will be < 150 KPa in absolute pressure, so as to limit the wall temperature to a temperature < 111°C.

Advantageously, step (a) of the method can be carried out:

- batchwise; the pasteurization tank can thus serve as a buffer tank before the metering device/use (for a continuous production, 2 tanks are required, in parallel). Advantageously, the tank and the piping of the device implementing the method according to the present invention are pasteurized at the same time as the chocolate;

- continuously, the device used for the pasteurization comprising no pasteurization tank, but a heat exchanger, for example with a scraped surface (with an installation devoted to pasteurization, there is never any need for cleaning: it is sufficient to pasteurize the downstream piping with chocolate according to the scale above, and to send the chocolate insufficiently pasteurized into the starting tank so as to recycle it).

Advantageously, this step (a) makes it possible to obtain a pasteurized chocolate comprising a contamination of less than 1 cfu/g of bacteria, yeast and mold, excluding bacterial spores, which cannot germinate at a temperature of less than or equal to 10°C, advantageously less than 1 cfu/100 g, advantageously less than 1 cfu/kg (1 cfu/g = 1000 cfu/kg).

Advantageously, the same tank is used for implementing steps (a) and (α).

In a particular embodiment of the invention, the method according to the present invention comprises an intermediate step (a1), between steps (a) and (b), consisting of storage with stirring of the pasteurized chocolate at a temperature of between 28 and 75°C, advantageously between 65 and 75°C, optionally without overpressure.

Once pasteurized (step (a)), the chocolate can be stored under pressure (step (a1)), advantageously at a temperature of between 28 and 50°C, advantageously at a pressure of between 10 and 30 KPa. When the storage temperature is < 36°C, the lower the temperature, the shorter the storage time will have to be (risk of solidification). For example, for formula 1 indicated in table 3, storage at 33°C can be carried out for approximately 40 hours without too marked an increase in viscosity (its viscosity at 33°C is of the order of 0.26 Pa.s under a strain of 150 Pa).

In a variant of the method according to the present invention, the storage is carried out under pressure at a temperature of between 28 and 38°C, preferably between 30 and 34°C.

In another variant of the method according to the present invention, the storage is carried out under pressure at a temperature of between 38 and 50°C, advantageously at a temperature of 45°C.

In another variant of the method according to the present invention, the storage is carried out at a temperature of between 65 and 75°C without overpressure, i.e. at atmospheric pressure.

Whatever the variant, the chocolates, which are very fluid, must be permanently stirred, in order to prevent settling out of the solid particles in suspension and fat separation.

In the method according to the present invention, step (a1) is carried out in a device equipped with an intermediate buffer tank. However, advantageously, the chocolate is stored in the pasteurization tank of step (a). Thus, the same tank is used for steps (a) and (a1).

Even more advantageously, the same tank is used for steps (α), (a) and (a1).

Moreover, it is advisable to maintain the pasteurization of the chocolate before it is injected during step (c). If the pasteurized chocolate remains stored in the pasteurization tank during step (a1), this avoids having to pasteurize a downstream tank, and the tank is thus pasteurized at each batch at the same time as the chocolate. Since the chocolate is anhydrous, it is not necessary to clean between two batches, unless the flavors or colors of the chocolate are incompatible. No time is therefore lost due to cleaning/pasteurization of the tank. In order to prevent any recontamination, the tank is advantageously pressurized by a sterile gas source (typically, 10 to 30 KPa).

Since the chocolate is incompatible with water, all the pipework downstream of the injection step (c), in the device for implementing the method according to the present invention, is advantageously pasteurized dry, in particular at the same time as the pasteurization of the chocolate at each batch, advantageously with a device having a double-walled jacket at 100°C/10 to 20 min, after cleaning or without cleaning. Other dry sterilization techniques exist, for example with hot fat (100°C/10 min).

Alternatively, the pipework downstream of the injection step (c), in the device for implementing the method according to the present invention, can also be pasteurized conventionally by cleaning in place, and then pasteurization with hot water or steam: however, it is necessary to drain off the water and preferably dry the installation before sending the pasteurized chocolate thereto (sterile gas stream, or vacuum, heated by double-walled jackets, for example filled with steam at 110 KPa in absolute pressure).

If step (a1) is carried out in a device equipped with an intermediate buffer tank, i.e. steps (a1) and (a) are not carried out in the same tank, the following two cases exist:

- the storage (step (a1)) is carried out at a temperature of less than 60-65°C. The intermediate buffer tank will then have to be pasteurized during the 1st use and each time the pasteurized state is lost (since the chocolate is virtually anhydrous, no microbial development can take place, except in an exceptional case: maintenance, etc.). This may be carried out conventionally (cleaning, then hot water sanitization, then evaporation), or preferably by heating ensuring a pasteurization strength Fz > 6000 min (for example, 22 h at 75°C), preferably Fz > 20 000 min;
- the storage (step (a1)) is carried out at a temperature > 75°C so as to have "continuous" pasteurization.

The above steps (a) and (a1) should avoid the incorporation of air, which reduces the water resistance of the chocolate. Optionally, degassing (for example, by placing the pasteurization and/or batch storage tank under vacuum) can be carried out.

In a second variant, the chocolate is sterilized. Advantageously, the method described in patent application WO 00/07456 is used. Thus, advantageously, the water activity (Aw) of the chocolate is increased to a value greater than approximately 0.7, advantageously greater than 0.8, the hydrated chocolate is subjected to a heat sterilization step, and the water is eliminated so as to recover an essentially sterile chocolate, which exhibits a contamination, in particular with respect to sporulated bacteria, that is at least 1000-fold less (3 log) than the starting chocolate, in particular less than 1 CFU/g.

Advantageously, the water activity is increased to a value of greater than 0.87, in particular between 0.9 and 0.96.

Advantageously, this method is carried out batchwise in the same tank.

According to the Aw, and the temperature and the duration of the heat treatment, the invention makes it possible in particular to obtain a reduction in microorganisms, of between 3 and 12 log (1000 to $10^{12}$ times less), in particular between 3 and 9 log, and advantageously of at least 5 log with respect to sporulated bacteria, advantageously of at least 6 log. Taking into account the initial contamination of the ingredients (100 to 10 000 sporulated bacteria per gram, approximately), this makes it possible to obtain an "essentially sterile" chocolate containing less than 1 CFU/g, preferably less than 1 CFU/100 g, and preferably less than 1 CFU/kg.

The water activity of a product is a notion that is well known in the food sector, this parameter, abbreviated to Aw, measures the water availability in a sample. In most cases, this water activity is not proportional to the water content of the product.

Methods for measuring the Aw of a product are known to those skilled in the art. The Aw is generally measured at 25°C.

This sterilization method is particularly suitable for the treatment of dark chocolate.

However, this method is also suitable for the production of various types of milk chocolate or white chocolate, that are essentially sterile. It is, for example, known that white chocolate contains no dry and defatted cocoa.

To hydrate the chocolate in order to attain the target Aw for sterilization, the required water is added either entirely at the start, or partly at the start and partly during the heating to the sterilization temperature for the chocolate, or only during the heating. This addition of water during the heating will advantageously be carried out by direct injection of food-quality steam into the chocolate.

The water can be added in pure form, or via aqueous compounds, for instance milk (skimmed or non-skimmed, concentrated or non-concentrated), cream or other milk derivatives, fruit juices, etc.

The Aw is measured in the following way and is referred to as equivalent Aw:

The proportion of water corresponding to the total water content that will be added at the end of the sterilization step (added water + condensed steam) is added to the chocolate, in a suitable laboratory mixer. Stirring is carried out for 15 min at 50°C, avoiding any evaporation, and the mixture is left to stand at 20°C in a closed flask containing little head space. After 24 hours, the chocolate is reduced to fine powder or is mixed (according to its consistency), and its Aw is measured at 25°C on a conventional device of Aqualab CX-2 or Decagon type.

In the context of the present invention, step (b) of the method according to the present invention consists in cooling the pasteurized or sterilized chocolate to a temperature of between 24 and 45°C, advantageously between 24 and 38°C, advantageously between 33 and 38°C.

In a particular embodiment of the invention, step (b) consists in tempering and cooling the chocolate to a temperature of between 24 and 30°C. Advantageously, if the chocolate is not tempered, it is cooled to a temperature of between 30 and 45°C, advantageously between 30 and 40°C, advantageously between 33 and 38°C. The tempering of the chocolate (presolidification) is not obligatory in fresh products, i.e. in the method according to the present invention, as it is for conventional applications stored at ambient temperature. However, it accelerates the solidification of the chocolate and slightly improves its crunchiness. The tempering may be carried out by means well known to those skilled in the art in the chocolate making industry. It may thus be very simplified, since, although in the chocolate making industry only V-shaped (stable) chocolate crystals are selected, chocolate crystals of any shape can be accepted here, since the storage conditions according to the present invention will prevent any whitening. The essential aim of the tempering is therefore simply to accelerate the solidification of the chocolate on contact with the acidic or neutral milk base during step (c) of the method according to the present invention, in particular by starting from a lower chocolate temperature and by having already crystallized part of the fat of the chocolate.

Advantageously, step (b) is carried out either directly in the storage tank of the optional step (a1), or on line, advantageously using a device equipped with a heat exchanger (for example, a scraped-surface exchanger). The on-line scraped-surface exchanger allows the chocolate to be cooled to a lower temperature, since the chocolate does not remain at this temperature for very long and will not have the time to solidify.

Advantageously, the entry of water into the device for implementing steps (a) and (b) and optional steps ($\alpha$) and (a1) will be avoided under all circumstances, using a device equipped with a nonreturn valve, just before the injecting device in step (c).

Thus, in a particular embodiment of the invention, the method according to the invention is carried out in a device that has a nonreturn valve in order to separate the stream of chocolate obtained in step (b) from the stream of acidic or neutral milk base.

In the context of the present invention, step (c) consists, in an environment in which the microorganisms are filtered out, advantageously under a laminar flow hood, of the injection of an advantageously continuous stream of pasteurized or sterilized, acidic or neutral milk base having a temperature of between its freezing point + 1°C and 12°C, advantageously between its freezing point + 1°C and 6°C, and of a discontinuous stream of pasteurized or sterilized, cooled chocolate, into a thermoformed or preformed decontaminated pot.

In a variant 1 of the method according to the present invention, step (c) is carried out by injection of the acidic or neutral milk base into the thermoformed or preformed pot, followed by injection of a layer of chocolate pieces at the surface of the acidic or neutral milk base.

Advantageously, step (c) also comprises a step consisting of injection, at the surface of the layer of chocolate pieces, of another layer of acidic or neutral milk base or of a layer of sweetened aqueous preparation that may contain a fruit purée or cocoa.

In this case, advantageously, the injection of the chocolate is carried out at the surface of the acidic or neutral fresh milk product (decoration of spot or grid type), it being possible for the whole to then be covered with another layer of acidic or neutral fresh milk product or of sweetened aqueous preparation (fruit, chocolate, etc).

In a particular embodiment of variant 1, step (c) is carried out by injection of an acidic or neutral sweetened aqueous preparation optionally containing a fruit purée or cocoa into the thermoformed or preformed decontaminated pot, followed by injection of a layer of chocolate pieces at the surface of the acidic or neutral sweetened aqueous preparation, followed by injection of a layer of acidic or neutral milk base.

In a variant 2 of the method according to the present invention, step (c) is carried out by coinjection of the acidic or neutral milk base and of the pasteurized or sterilized, cooled chocolate, for example using a double "octopus" with at least three nozzles for chocolate, advantageously comprising between five and eight nozzles for chocolate.

In the context of the two variants of step (c), the chocolate solidifies by contact with the acidic or neutral milk base having a temperature of between its freezing point + 1°C and 12°C, advantageously between its freezing point + 1°C and 6°C. Advantageously, the injection of the chocolate is carried out by spotting (i.e. by injection of a metered amount of liquid chocolate which solidifies in chips or filaments, advantageously having a mean size of between 2 and 10 mm). Advantageously, this injection is not spraying.

Regulation of the injection time, of the amount of chocolate infected, of the differential chocolate/milk base rate and, optionally, of the orientation of the nozzles make it possible to regulate the form of the chocolate in the layer of chocolate pieces of the multilayer product according to the present invention:

- spots/large chips,
- rods which will be broken only during tasting (with a spoon or in the mouth).

The outlet speed from the chocolate-injecting nozzle will be adjusted to the viscosity of the acidic or neutral milk base in order to prevent mixing between the two streams.

Advantageously, the injection of the acidic or neutral milk base and of the chocolate takes place under a laminar flow hood belonging to the conventional metering device for the fresh milk product in order to prevent any recontamination.

Two-dimensional or three-dimensional structures can be obtained, firstly, using one or more mobile nozzles, or, secondly, using fixed nozzles that deposit spots which join up with one another.

Advantageously, the largest dimension of the chocolate pieces is greater than five millimeters, advantageously at least 6 mm. Advantageously, the thickness of the layer of chocolate pieces is between 1 and 6 mm, advantageously between 1 and 3 mm, even more advantageously between 3 and 6 mm.

Advantageously, the layer of chocolate pieces is in the form of a succession of large chips or of a stick or of disks or in the form of a grid.

In the context of the present invention, step (d) of the method according to the present invention consists of placing a cover on the pot containing a multilayer, acidic or neutral fresh milk product containing at least one layer of pieces of pasteurized or, sterilized chocolate having a fat concentration of between 43 and 85% by weight, said product being conserved at a temperature of between 1 and 10°C for a period of between 12 days and six weeks.

Advantageously, this step is immediate.

Once a cover has been put in place, recontaminations are no longer possible.

Advantageously, the multilayer milk product obtained comprises no additive or preserving agent. Advantageously, it contains no alcohol.

In a particular embodiment of the invention, the method according to the present invention comprises an additional step (e) consisting of cooling (advantageously by passage through a cooling tunnel) of the product obtained in step (d) to 4°C, and of storage at a temperature of less than 10°C, advantageously less than 4°C.

The present invention also relates to a multilayer, acidic or neutral fresh milk product,

- which comprises at least one layer of chocolate pieces in which the largest dimension of the chocolate pieces is greater than 5 millimeters, advantageously a discontinuous layer of chocolate,
- wherein the chocolate is pasteurized and sterilized and has a fat content of between 43 and 85% by weight,
- and wherein the multilayer, acidic or neutral fresh milk product is conserved at a temperature of between 1 and 10°C for a period of between 12 days and six weeks.

Advantageously, the product according to the present invention is obtainable by means of the method according to the present invention and as described above.

Advantageously, the chocolate contained in the product according to the present invention has the characteristics indicated above in the context of the method according to the present invention. Advantageously, the same is true for the acidic or neutral fresh milk product, excluding the layer of chocolate pieces.

Advantageously, the product according to the present invention contains neither additive, nor preserving agent, nor alcohol.

Advantageously, the layer of chocolate pieces is located at the surface of the acidic or neutral milk product.

Advantageously, the layer of chocolate pieces is covered with a layer of acidic or neutral milk product and/or an aqueous preparation that may contain a fruit purée or cocoa.

Thus, for example, it is possible to have:

- a multilayer product comprising the following successive layers (from the bottom of the pot to the surface): a layer of milk base, a layer of chocolate pieces and a layer of milk base or of aqueous preparation,
- or a multilayer product comprising the following successive layers (from the bottom of the pot to the surface): a layer of milk base, a layer of chocolate pieces, a layer of aqueous preparation and a layer of milk base,
- a multilayer product comprising the following successive layers (from the bottom of the pot to the surface): a layer of aqueous preparation, a layer of chocolate pieces and a layer of milk base.

The invention will be understood more clearly and the aims, advantages and characteristics thereof will emerge more clearly from the description which follows and which is given with reference to the attached drawings representing nonlimiting examples of implementation of the invention, and in which:

Figure 1 represents a first example of a device for implementing pasteurization step (a) and step (b) and optional steps ($\alpha$) and (a1) of the method according to the present invention, step (a) consisting of a batchwise dry pasteurization.

Figure 2 represents a second example of a device for implementing pasteurization step (a) and step (b) and optionally steps ($\alpha$) and (a1) of the method according to the present invention, step (a) consisting of a batchwise dry pasteurization.

Figure 3 represents a device for implementing pasteurization step (a) and step (b) and optional steps (a1) and ($\alpha$) of the method according to the present invention, step (a) consisting of a continuous dry pasteurization.

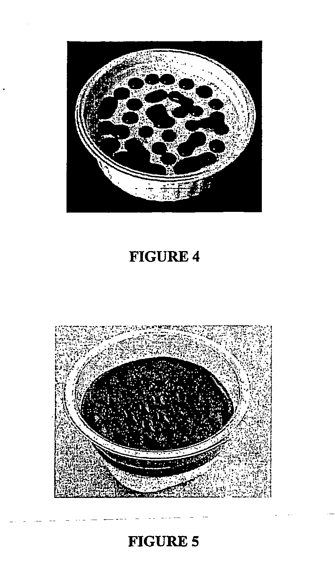

Figure 4 represents a product according to the present invention consisting of a chocolate disks (as layer of chocolate pieces) at the surface of a cream dessert (as neutral milk base).

Figure 5 represents a product according to the present invention consisting of a crunchy grid of chocolate (as layer of chocolate pieces) buried in a ganache (as sweetened aqueous preparation), lying on a vanilla mousse (as neutral milk base).

Figure 6 represents details of the ultra-clean double-"octopus" metering device (used in the context of example 3).

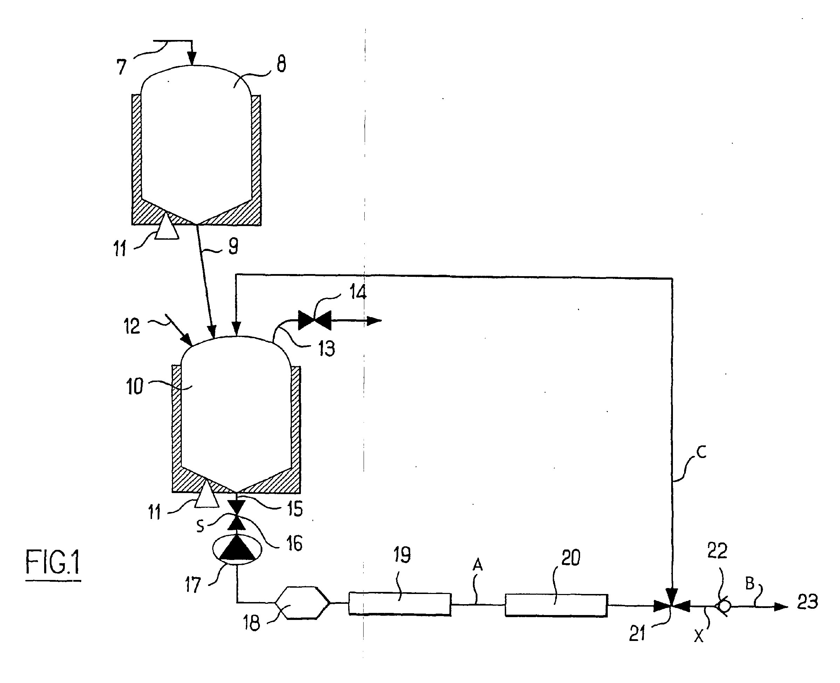

The aim of the device represented in figure 1 is to pasteurize and cool (steps (a) and (b)) and optionally to prepare and store (steps ($\alpha$) and (a1)) the chocolate according to the method of the present invention.

This device comprises an inlet (7), for the ingredients intended for the preparation of the chocolate, a tank (8) for preparing and storing the unpasteurized chocolate, an outlet (9) for the prepared chocolate, a tank (10) for pasteurization and storage of the chocolate under pressure, mounted on scales (11), an inlet (12) for sterile nitrogen, a vent (13) allowing the gases to leave, equipped with a valve (14), an outlet (15) for the pasteurized chocolate, equipped with a valve (16), a pipe A equipped with a pump (17), with 500 $\mu$m filters (18), with a mass flow meter (19), and with a heat exchanger (20) (heating of the chocolate during pasteurization, cooling during injection), a pipe C, a 3-way valve (21), and a pipe B equipped with a nonreturn valve (22) and with an outlet to the injecting device or the metering device (23).

The chocolate can be prepared in the tank (8) by addition of the ingredients in bulk via the inlet (7). This tank (8) is a stirred tank with a double-walled jacket, mounted on scales (11), which can also enable storage before pasteurization, for example at 50°C. The transfer via the outlet (9) into the pasteurization tank (10) can take place by gravity, overpressure, or using a pump. Alternatively, the tank (8) does not exist and its preparation takes place directly in the pasteurization tank (10), the ingredients entering via the pipework (9).

The pasteurized chocolate remains stored in the pasteurization tank (10): this avoids a tank having to be pasteurized downstream, and the tank (10) is thus pasteurized at each batch at the same time as the chocolate. Since the chocolate is anhydrous, it is not necessary to clean between two batches, unless the flavors or colors are incompatible. There is thus no loss of time due to cleaning/pasteurization of the tank (10). In order to prevent any recontamination, the tank (10) is pressurized by means of a sterile gas source (typically 10 to 30 KPa relative).

Since the chocolate is incompatible with water, the preferred variant consists in pasteurizing all the pipework (A, C, (9), (12), (13), (15)) dry, in particular at the same time as the pasteurization of the chocolate at each batch, since the circulation, during the pasteurization, in tubes A and C (double-walled jackets with preferably the same heating fluid as the pasteurization tank (10)). In order to improve the heat exchange and to limit sedimentation, in particular for chocolates with the high fat content, which are very fluid, these pipes will be either small in diameter relative to the flow rate (as high a rate as possible), or equipped with static mixers, or with sterile compressed air pumps (for example, 20 s every 10 min in the event of no movement).

The heat exchanger (20) is optional: it may make it possible to accelerate heat exchanges, in particular when the surface/volume ratio of the tank (10) is unfavorable (large capacity). Preferably, it will be of scraped surface type, so as to also be used in cooling (tempering) in step (b) of the method according to the present invention. An overpressure in the circuit will prevent recontamination via the revolving mechanical fittings.

Then it remains just to pasteurize the pipework B and its accessories downstream of the point X. In a 1st variant, this part B will be as short as possible, if possible reduced to less than 20 cm in length corresponding to the valve (21), the nonreturn valve (22), the pipework B and the outlet to the injecting device/metering device (23), which will preferably also be pasteurized dry (double-walled jacket at 100°C/10 to 20 min) after cleaning or without cleaning.

The nonreturn valve (22) prevents the chocolate (anhydrous) from being contaminated with the water from the sweetened aqueous preparation in the event of reverse pressure.

Alternatively, the pipework B downstream of the point X can also be pasteurized conventionally by cleaning in place, and then pasteurization with hot water or steam: however, it is necessary to eliminate the water and preferably to dry the installation before sending the chocolate thereto (stream of sterile gas, or vacuum, heated with double-walled jacket, for example filled with steam at 100 KPa in absolute pressure).

Alternatively, the valve (16) can remain closed during the pasteurization and the return C is then nonexistent: it is then necessary to clean/sterilize/dry the entire installation downstream of the point S, conventionally as indicated above.

Other dry sterilization techniques exist, for example with hot fat (100°C/10 min).

The double-walled jacket of the pipework C will advantageously be at a minimum temperature of 40°C, so as to prevent crystallization in the pipe, especially when the metering is carried out at a temperature ≤35°C. The valve (21) (3-way) closes the pipework C when the chocolate is injected into the pot: this makes it possible to determine the flow rate injected via the flow meter (19). Preferably, the pump (17) is controlled by the flow rate indicated by the flow meter (19).

Ideally, the tank (10) is on scales (11) so as to facilitate the management of the ingredients, in particular the use of pasteurized chocolate. Alternatively, level detectors (capacities, vibrating bimetal, etc.) will perform the same function. All the pipework (A, B, C, (9), (13), (15), (7), (12))/tanks ((10), (8))/, accessories for chocolate have a double-walled water jacket (preferred variant), or even have trace heating using strip electrical resistors (less well regulated).

The flow rate of chocolate should be even when injected.

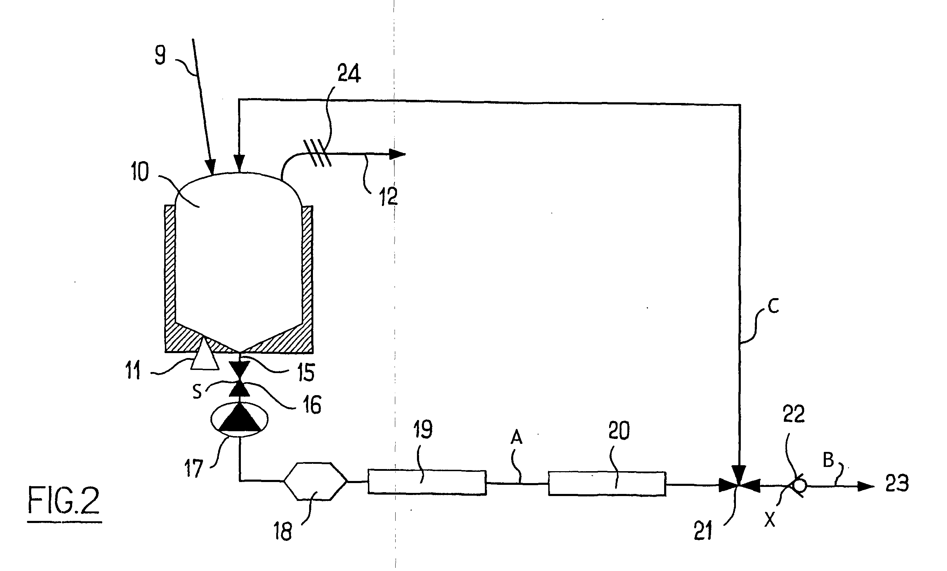

The device in figure 2 comprises a pasteurization and storage tank (10) which is not pressurized, mounted on scales (11), an inlet (9) for the ingredients for producing the chocolate, a permanent vent (12) equipped with a sterile filter (24), an outlet (15) for the pasteurized chocolate, equipped with a valve (16), a pipe A equipped with a pump (17), with 500 μm filters (18), with a mass flow meter (19), and with a heat exchanger (20), a pipe C, a 3-way valve (21), and a pipe B equipped with a nonreturn valve (22) and with an outlet (23) to the injecting device and the metering device.

The tank (10) is not pressurized (and therefore less expensive), and has been constructed with respect to less strict standards in terms of hygiene than the tank in figure 1. It is connected to ambient air via a sterile filter (24) that acts as a vent (12) to eliminate the steam. After pasteurization, the chocolate is stored at 70-75°C without overpressure (this kills any possible recontaminants) and, is then cooled on line before injection, with 2 variants:

- cooling to 31-40°C (double-walled water jacket at 28-39°C), preferably 35-38°C, by means of any exchanger (20) (tubular or scraped surface, or even plates);
- cooling of the chocolate to 24-31°C by means of a scraped surface exchanger (20) (preferred variant, since the temperature is lower, and crystallization is therefore more rapid).

The pipework A between the point S and the heat exchanger and C will also be maintained at 70-75°C for microbiological reasons (no recontamination in the event of a leak in the pump (17)).

The scales (11) are optional and can be replaced with off-line weighing out, or else flow meters. The 500 μm filters (18) and the flow meter (19) are optional.

In figures 1 and 2, it is possible to store the pasteurized chocolate in an intermediate buffer tank placed between the valve (16) and the heat exchanger (20) (failing this, the point X) : if the storage is carried out at less than 75°C, it will then have to be pasteurized during the 1st use and that each loss of the pasteurized state (since the chocolate is virtually anhydrous, no microbial growth can take place, except in an exceptional case: maintenance, etc.). This may be carried out conventionally (cleaning, then hot water sanitization, then evaporation), or preferably by heating, providing an $F_z >$ 6000 min (for example, 22 h at 75°C), preferably $F_z > 20\,000$ min.

It is also possible to permanently store the chocolate from this tank at 75°C so as to have "continuous" pasteurization.

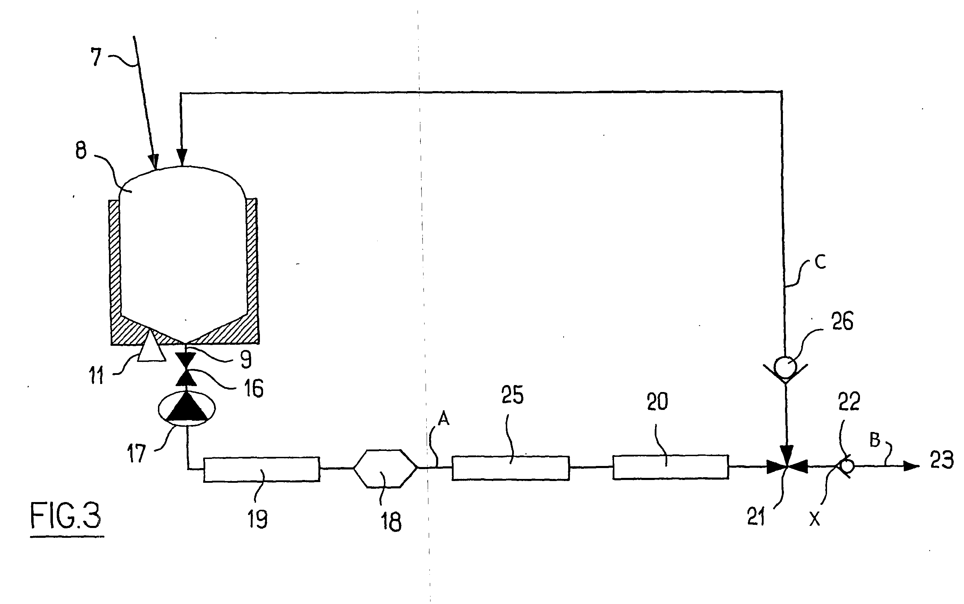

Figure 3 represents a device comprising a tank (8) for preparation and storage of the unpasteurized chocolate, mounted on scales (11), an inlet (7) for the ingredients for preparing the chocolate, an outlet (9) for the unpasteurized prepared chocolate, equipped with a valve (16), a pipe A equipped with a pump (17), with a mass flow meter (19), with 500 $\mu$m filters (18), with a heat exchanger for the heating and the pasteurization (25), and with a heat exchanger for the cooling (20), a pipe C equipped with a nonreturn valve (26), a 3-way valve (21) and a pipe B equipped with a nonreturn valve (22) and with an outlet to the injecting device or the metering device (23). When the device is run, the part between the pasteurizing device and the nonreturn valve (26) of the pipe C (heat exchanger (25)) is pasteurized by heating the entire conduit at 100°C/20 min. Only then is the cooling device (heat exchanger (20)) turned on and the valve (16) opened in order to use the chocolate. If the injection is stopped for a few minutes, the chocolate is recycled via the pipework C, the double-wall jacket of which is at 50°C. Alternatively, a buffer tank at 70°C + delivery pump can be added before the heat exchanger intended for the cooling (20). The part of the pipework C downstream of the nonreturn valve (26) is considered to be unpasteurized. Furthermore, in this device, it is advisable to take precautions in the pipework using agitation due to the speed, air or static mixers. Ideally, the pipework C, which is not always fed, will be sloping so as to self-empty, or will be equipped with static mixers.

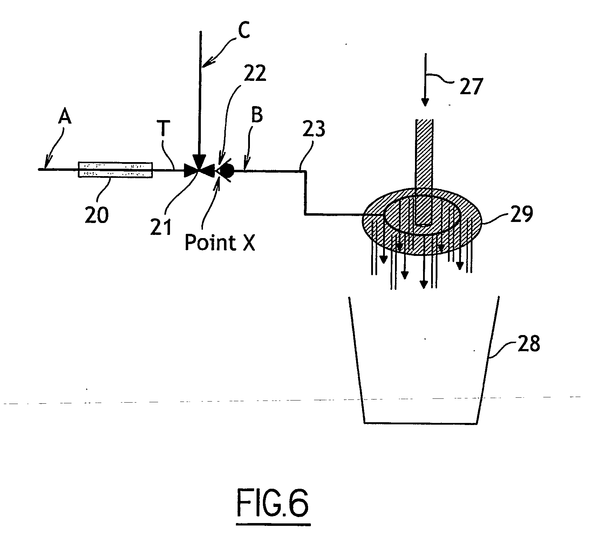

Figure 6 represents details of the ultra-clean double-"octopus" metering device comprising: pipes A, B and C, a heat exchanger (20), a three-way valve (21), a nonreturn valve (22), a stream of pasteurized or sterilized chocolate (23), a stream of milk base (27), a thermoformed or preformed decontaminated pot (28) and a double-"octopus" metering device (29).

The steps consisting of thermoforming or decontamination and then metering and placing a cover on the pot are carried out under a laminar flow hood (not represented in the interests of simplification).

The chocolate circuit (A, (20), (21), (22), (23) B and C) is entirely separate from the milk base circuit (27), and has a double-walled jacket at 29°C from the point X. In the event of the machine stopping for longer than 1 min, the double-walled jacket is brought to 38°C to prevent blockages. The fresh milk product (27) is metered continuously, at 4°C, into the pot (28), whereas the metering of the chocolate (23) alternates.

The following examples are given by way of nonlimiting indication.

## Example 1

The analytical composition of the chocolate used is as follows:

68% by weight of fat (cocoa butter only), 8% by weight of defatted cocoa and 24% by weight of sucrose. This composition is obtained by mixing 45.7% of a dark chocolate No. 1 with 54.3% of cocoa butter. The dark chocolate No. 1 is composed of 30.0% of fat (cocoa butter only, except for 0.3% of lecithin), 52.5% of sugar and 17.5% of dry defatted cocoa (provided only by the cocoa paste). Its particle size measured on a Palmer is 22 $\mu$m.

The chocolate (formula above) is produced, pasteurized and stored in the same 1000 1 tank equipped with a double-walled jacket and with a stirrer that scrapes the walls (batch) (figure 1).

The initial natural mold and yeast contamination of the chocolate is 50 cfu/g.

The preparation of the chocolate is carried out as follows: blocks of 25 kg of solid cocoa butter (20°C) are melted in the closed tank (10), the double-walled jacket being supplied with steam at 100-110°C so as to accelerate the melting. Once said cocoa butter is molten, the chocolate, purchased as "easy melt" (chips, or pieces typically of 1 to 30 g), is melted into this cocoa butter at approximately 100°C and the double-walled jacket is regulated at 75°C. Once the dark chocolate No. 1 is molten, the stirring (maximum) is then started out in order to homogenize the chocolate and prevent settling out.

The tank (10) is closed, the pump (17) starts up so as to provide circulation in the pipeworks A and C, and the chocolate, subjected to maximum stirring, is brought to 100°C by heating via the double-walled jacket supplied with steam (vapor pressure 110 KPa in absolute pressure). When a temperature of 100°C is reached at all points (tank (10) and outlet pipework C), it is maintained for 5 minutes ($F_z = 41\,700$ min), and the tank (10) is opened to the air by means of a vent (13) via a sterile filter so as to eliminate the steam. The tank (10) is then closed again and is placed under a nitrogen pressure (12) via a sterile filter, the pressure being regulated at 120 KPa in absolute pressure until the production of the next batch, so as to prevent any entry of gas or of material from the outside which could recontaminate the pasteurized product.

The chocolate is then immediately cooled to 42°C by regulation of the water inlet into the double-walled jackets, and is maintained at 42°C until use.

The taste of the chocolate has not been substantially modified by the pasteurization.

The residual contamination thereof is less than 1 cfu per 30 g (excluding sporulated bacteria), i.e. a decrease of greater than 3 log.

The method for counting yeast + molds in the chocolate ("25°C/5+5" method) is as follows:

The yeast and mold contamination is counted by diluting the chocolate to 1/10th in a conventional "malt extract" medium (mixture at 40°C so that the chocolate is clearly fluid), and then enriching (the molds/yeast initially present) at 25°C/5 days with agitation (molds are aerobic). At the end of this, 1 ml is taken and deposited on a "malt extract agar" medium and incubated at 25°C/5 days. The presence or absence of contaminant (yeasts/molds) is then noted.

Under a laminar flow hood, droplets of pasteurized chocolate, which may or may not be tempered (i.e. cooled by means of a scraped surface), are deposited, with an ultra-clean multinozzle metering device, at the surface of a yoghurt at 4 or 10°C, the yoghurt having been metered beforehand into a thermoformed or preformed (decontaminated) pot.

The % composition, by weight, of the sweetened yoghurt is as follows:

| skimmed milk powder: . | 2.1% |
|---|---|
| sugar | 8% |
| gelatin | 0.4% |
| lactic ferment | |
| milk containing 0% fat | 89.6%. |

A cover is then placed on the pots, which are left in ambient air at 16°C for a few minutes.

After cooling, the droplets deposited form small crunchy disks at the surface of the yoghurt, that are approximately 5 to 8 mm in diameter and 2 mm thick. The product is conserved for 30 days at 4°C without preserving agents.

The following tests show the solidification time of the chocolate under various metering conditions:

| NON-TEMPERED CHOCOLATE | | TEMPERED CHOCOLATE | |
|---|---|---|---|
| Yoghurt temperature | 10°C | Yoghurt temperature | 10°C |
| Chocolate temperature during injection | 42°C | Chocolate temperature during injection | 28°C |
| Chocolate solidification time | 1 min 30 s | Chocolate solidification time | 50 seconds |
| Yoghurt temperature | 4°C | Yoghurt temperature | 4°C |
| Chocolate temperature during injection | 42°C | Chocolate temperature during injection | 28°C |
| Chocolate solidification time | 45 seconds | Chocolate solidification time | 35 seconds |

The tempered chocolate (28°C) reduces the solidification time; the higher the temperature of the acidic or neutral milk base, the greater the reduction in solidification time due to the tempered chocolate. At 4°C, the difference tends to become negligible, which demonstrates the advantage of working on a very cold acidic or neutral milk product.

## Example 2

The method is identical to that of example 1, except for the following differences:

The same product as in Example 1 is produced, the chocolate being deposited at 28°C onto yoghurt at 4°C. Before the placing of a cover on the pot, a second layer of yoghurt, 1.5 cm thick, covers the chocolate disks, approximately 22 seconds after they have been metered. The product is then covered.

## Example 3

The chocolate of formula 2 table 3 is prepared, pasteurized and stored as described in Example 1. It is then cooled on line to 28°C on a scraped surface, and then co-metered with the yoghurt into a noncontaminated 500 g pot, under a laminar flow hood, with the ultra-clean double-"octopus" metering device (figure 6).

The chocolate circuit is entirely separate from the yoghurt circuit, and has a double-walled jacket at 29°C from the point X. In the event of the machine stopping for longer than 1 min, the double-walled jacket is brought to 38°C in order to prevent blockages. The fresh milk product is metered continuously, at 4°C, into the pot, whereas the metering of the chocolate alternates, for example in 3 spots (volume equivalent to a sphere 6 mm in diameter) staged vertically in the pot, i.e. 18 spots of chocolate for an "octopus" with 6 nozzles for chocolate. The chocolate spots are buried in the fresh milk product (optionally, partially at the surface). The pots are then covered and left in ambient air at 16°C for a few minutes, and then cooled and stored at 4°C.

The product is conserved for 30 days at 4°C without preserving agents.

**Claims**

1.  A method for producing a multilayer, acidic or neutral fresh milk product comprising at least one layer of chocolate pieces, which method comprises the following successive steps:

    a) pasteurization of the chocolate having a fat content of between 43 and 85% by weight with a pasteurization strength $F_z$ of between 6000 and 10 000 000 min, advantageously between 10 000 and 500 000 min, even more advantageously between 15 000 and 100 000 min,
    or sterilization of the chocolate having a fat content of between 43 and 85% by weight;
    b) cooling of the pasteurized or sterilized chocolate to a temperature of between 24 and 45°C, advantageously between 24 and 38°C, advantageously between 33 and 38°C;
    c) in an environment in which the microorganisms are filtered out, injection of a stream of pasteurized or sterilized, acidic or neutral milk base having a temperature of between "its freezing point + 1°C" and 12°C, advantageously between "its freezing point + 1°C" and 6°C and of a discontinuous stream of pasteurized or sterilized, cooled chocolate, into a thermoformed or preformed decontaminated pot;
    d) placing a cover on the pot containing a multilayer, acidic or neutral fresh milk product containing at least one layer of pieces of pasteurized or sterilized chocolate having a fat concentration of between 43 and 85% by weight, said product being conserved at a temperature of between 1 and 10°C for a period of between 12 days and six weeks.

2.  The method as claimed in claim 1, wherein the chocolate has a parameter ($\tau$) less than 3, advantageously less than 2, advantageously less than 1, the parameter ($\tau$) being defined by the following equation (1) :

$$\tau = (- [water] + 0.37) \times F + (5.25 \times [water] - 1.67) \times (S+SMP) + (26.2 \times [water] - 9.6) \times C + (61 \times [water] - 14.5) \times (S+SMP) \times C,$$

    with:

    - [water] is the local free water content of the acidic or neutral milk base (in g/g),
    - F is the fat content of the chocolate (in g/g),
    - S + SMP is the content of sugars + skimmed milk powder of the chocolate (g/g),
    - C is the content of dry and defatted cocoa of the chocolate (in g/g).

3.  The method as claimed in claim 1 or 2, wherein the chocolate has a DDC/(S+SMP) ratio < 2.3, advantageously less than 1.6, even more advantageously less than 1.

4.  The method as claimed in any one of the preceding claims, wherein the acidic milk base is a fermented product containing live ferments, and in particular a yoghurt.

5.  The method as claimed in any one of claims 1 to 3, wherein the neutral milk base is a mousse.

6.  The method as claimed in any one of the preceding claims, wherein the pasteurization step (a) is carried out dry.

7.  The method as claimed in any one of the preceding claims, wherein step (b) consists in tempering and cooling the chocolate to a temperature of between 24 and 30°.

8. The method as claimed in any one of the preceding claims, wherein step (c) is carried out by injection of the acidic or neutral milk base into the thermoformed or preformed decontaminated pot, followed by injection of a layer of chocolate pieces at the surface of the acidic or neutral milk base.

9. The method as claimed in claim 8, wherein step (c) also comprises a step consisting of injection, at the surface of the layer of chocolate pieces, of another layer of acidic or neutral milk base and/or of a layer of sweetened aqueous preparation that may contain a fruit purée or cocoa.

10. The method as claimed in any one of claims 1 to 7, wherein step (c) is carried out by injection of an acidic or neutral sweetened aqueous preparation optionally containing a fruit purée or cocoa into the thermoformed or preformed decontaminated pot, followed by injection of a layer of chocolate pieces at the surface of the acidic or neutral sweetened aqueous preparation, followed by injection of a layer of acidic or neutral milk base.

11. The method as claimed in any one of claims 1 to 7, **characterized in that** step (c) is carried out by coinjection of the acidic or neutral milk base and of the pasteurized or sterilized, cooled chocolate, advantageously using a double "octopus" with at least 3 nozzles for chocolate.

12. The method as claimed in any one of the preceding claims, wherein the injection of the chocolate is carried out by spotting.

13. The method as claimed in any one of the preceding claims, wherein the largest dimension of the chocolate pieces in the layer of chocolate pieces is greater than five millimeters.

14. The method as claimed in any one of the preceding claims, wherein the layer of chocolate pieces is in the form of a succession of large chips or of sticks or of disks or in the form of a grid.

15. The method as claimed in any of one of the preceding claims, wherein the layer of chocolate pieces has a three-dimensional structure.

16. The method as claimed in any one of the preceding claims, which method comprises an additional step (e) consisting of cooling of the product obtained in step (d) to 4°C, and then of storage at a temperature of less than 10°C, advantageously less than 4°C.

17. A multilayer, acidic or neutral fresh milk product,

   - which comprises at least one layer of chocolate pieces, in which the largest dimension of the chocolate pieces is greater than 5 millimeters,
   - wherein the chocolate is pasteurized or sterilized and has a fat content of between 43 and 85% by weight,
   - and wherein the multilayer, acidic or neutral fresh milk product is conserved at a temperature of between 1 and 10°C for a period of between 12 days and six weeks.

18. The product as claimed in claim 16, which is obtainable by means of the method as claimed in any one of claims 1 to 16.

19. The product as claimed in either one of claims 17 or 18, wherein the chocolate has a parameter ($\tau$) less than 3, advantageously less than 2, advantageously less than 1, the parameter ($\tau$) being defined by the following equation (1):

$$\tau = (- [\text{water}] + 0.37) \times F + (5.25 \times [\text{water}] - 1.67) \times (S + SMP) + (26.2 \times [\text{water}] - 9.6) \times C + (61 \times [\text{water}] - 14.5) \times (S + SMP) \times C,$$

with:

   - [water] is the local free water content of the acidic or neutral milk base (in g/g),
   - F is the fat content of the chocolate (in g/g),
   - S + SMP is the content of sugars + skimmed milk powder of the chocolate (g/g),

- C is the content of dry and defatted cocoa of the chocolate (in g/g).

20. The product as claimed in any one of claims 17 to 19, wherein the chocolate has a DDC/(S + SMP) ratio < 2.3, advantageously less than 1.6, even more advantageously less than 1.

21. The product as claimed in any one of claims 17 to 20, which is a fermented milk product containing live ferments, and in particular a yoghurt.

22. The product as claimed in any one of claims 17 to 20, which is a neutral mousse.

23. The product as claimed in any one of claims 17 to 22, wherein the layer of chocolate pieces is located at the surface of the acidic or neutral milk product.

24. The product as claimed in any one of claims 17 to 23, wherein the layer of chocolate pieces is covered with a layer of acidic or neutral milk product and/or an aqueous preparation that may contain a fruit purée or cocoa.


**Patentansprüche**

1. Verfahren zur Herstellung eines mehrschichtigen sauren oder neutralen Frischmilchprodukts, das mindestens eine Schicht von Schokoladestückchen umfasst, wobei das Verfahren die folgenden aufeinanderfolgenden Schritte umfasst:

   a) Pasteurisieren der Schokolade mit einem Fettgehalt zwischen 43 und 85 Gew.-% mit einer Pasteurisierungsfestigkeit $F_z$ zwischen 6000 und 10 000 000 min, vorteilhaft zwischen 10 000 und 500 000 min, noch vorteilhafter zwischen 15 000 und 100 000 min,
   oder Sterilisieren der Schokolade mit einem Fettgehalt zwischen 43 und 85 Gew.-%,
   b) Abkühlen der pasteurisierten oder sterilisierten Schokolade bei einer Temperatur zwischen 24 und 45 °C, vorteilhaft zwischen 24 und 38 °C, vorteilhaft zwischen 33 und 38 °C,
   c) Injektion eines Stromes pasteurisierter oder sterilisierter saurer oder neutraler Milchbasis mit einer Temperatur zwischen "deren Gefrierpunkt + 1 °C" und 12 °C, vorteilhaft zwischen "deren Gefrierpunkt + 1 °C" und 6 °C und eines diskontinuierlichen Stroms pasteurisierter oder sterilisierter abgekühlter Schokolade in einen wärmegeformten oder vorgeformten dekontaminierten Topf in einer Umgebung, in der die Mikroorganismen herausgefiltert sind;
   d) Versehen des Topfes, der ein mehrschichtiges saures oder neutrales Frischmilchprodukt enthält, welches mindestens eine Schicht von Stückchen pasteurisierter oder sterilisierter Schokolade mit einer Fettkonzentration zwischen 43 und 85 Gew.-% enthält, mit einem Deckel, wobei das Produkt bei einer Temperatur zwischen 1 und 10 °C über eine Zeitspanne zwischen 12 Tagen und 6 Wochen aufbewahrt wird.

2. Verfahren nach Anspruch 1, bei dem die Schokolade einen Parameter ($\tau$) von weniger als 3, vorteilhaft weniger als 2, vorteilhaft weniger als 1 aufweist, wobei der Parameter ($\tau$) durch die folgende Gleichung definiert ist:

$$\tau = (- [\text{Wasser}] + 0{,}37) \times F + (5{,}25 \times [\text{Wasser}] - 1{,}67) \times (S+SMP) + (26{,}2 \times [\text{Wasser}] - 9{,}6) \times \dot{C} + (61 \times [\text{Wasser}] - 14{,}5) \times (S+SMP) \times C,$$

mit:

   - [Wasser] ist der lokale freie Wassergehalt der sauren oder neutralen Milchbasis (in g/g),
   - F ist der Fettgehalt der Schokolade (in g/g),
   - S + SMP ist der Gehalt an Zuckern + Magermilchpulver der Schokolade (g/g),
   - C ist der Gehalt an trockenem und entfettetem Kakao der Schokolade (in g/g).

3. Verfahren nach Anspruch 1 oder 2, bei dem die Schokolade ein Verhältnis DDC/(S+SMP) < 2,3, vorteilhaft weniger als 1,6, noch vorteilhafter weniger als 1 aufweist.

4. Verfahren nach irgendeinem der vorangehenden Ansprüche, bei dem die saure Milchbasis ein fermentiertes Produkt, das lebende Fermente enthält, und insbesondere ein Joghurt ist.

**5.** Verfahren nach irgendeinem der Ansprüche 1 bis 3, bei dem die neutrale Milchbasis eine Mousse ist.

**6.** Verfahren nach irgendeinem der vorangehenden Ansprüche, bei dem der Pasteurisierungsschritt (a) trocken durchgeführt wird.

**7.** Verfahren nach irgendeinem der vorangehenden Ansprüche, bei dem der Schritt (b) in einer Wärmebehandlung und einem Abkühlen der Schokolade auf eine Temperatur zwischen 24 und 30 °C besteht.

**8.** Verfahren nach irgendeinem der vorangehenden Ansprüche, bei dem der Schritt (c) durch Injektion der sauren oder neutralen Milchbasis in den wärmegeformten oder vorgeformten dekontaminierten Topf, gefolgt von der Injektion einer Schicht von Schokoladestückchen an der Oberfläche der sauren oder neutralen Milchbasis durchgeführt wird.

**9.** Verfahren nach Anspruch 8, bei dem der Schritt (c) auch einen Schritt umfasst, der aus einer Injektion einer weiteren Schicht von saurer oder neutraler Milchbasis und/oder einer Schicht einer gesüßten wässrigen Zubereitung, welche ein Fruchtpüree oder Kakao enthalten kann, an der Oberfläche der Schicht von Schokoladestückchen besteht.

**10.** Verfahren nach irgendeinem der Ansprüche 1 bis 7, bei dem der Schritt (c) durch Injektion einer sauren oder neutralen gesüßten wässrigen Zubereitung, die gegebenenfalls ein Fruchtpüree oder Kakao enthält, in den wärmegeformten oder vorgeformten dekontaminierten Topf, gefolgt von der Injektion einer Schicht von Schokoladestückchen an der Oberfläche der sauren oder neutralen gesüßten wässrigen Zubereitung, gefolgt von der Injektion einer Schicht aus saurer oder neutraler Milchbasis, durchgeführt wird.

**11.** Verfahren nach irgendeinem der Ansprüche 1 bis 7, **dadurch gekennzeichnet, dass** der Schritt (c) durch Coinjektion der sauren oder neutralen Milchbasis und der pasteurisierten oder sterilisierten abgekühlten Schokolade, vorteilhaft unter Verwendung eines Doppel-"Oktopus" mit mindestens 3 Düsen für Schokolade, durchgeführt wird.

**12.** Verfahren nach irgendeinem der vorangehenden Ansprüche, bei dem die Injektion der Schokolade durch Einsprenkeln durchgeführt wird.

**13.** Verfahren nach irgendeinem der vorangehenden Ansprüche, bei dem die größte Abmessung der Schokoladestückchen in der Schicht von Schokoladestücken größer als 5 mm ist.

**14.** Verfahren nach irgendeinem der vorangehenden Ansprüche, bei dem die Schicht der Schokoladestückchen in Form einer Aufeinanderfolge von großen Schnitzeln oder von Stäbchen oder von Scheiben oder in Form eines Gitters vorliegt.

**15.** Verfahren nach irgendeinem der vorangehenden Ansprüche, bei dem die Schicht von Schokoladestückchen eine dreidimensionale Struktur aufweist.

**16.** Verfahren nach irgendeinem der vorangehenden Ansprüche, wobei das Verfahren einen zusätzlichen Schritt (e) umfasst, der aus dem Abkühlen des im Schritt (d) erhaltenen Produkts auf 4 °C und dann der Lagerung bei einer Temperatur von weniger als 10°C, vorteilhaft weniger als 4 °C besteht.

**17.** Mehrschichtiges saures oder neutrales Frischmilchprodukt,

- welches mindestens eine Schicht von Schokoladestückchen umfasst, bei der die größte Abmessung der Schokoladestückchen mehr als 5 mm beträgt,
- wobei die Schokolade pasteurisiert oder sterilisiert ist und einen Fettgehalt zwischen 43 und 85 Gew.-% aufweist,
- und wobei das mehrschichtige saure oder neutrale Frischmilchprodukt bei einer Temperatur zwischen 1 und 10 °C über eine Zeitspanne zwischen 12 Tagen und 6 Wochen aufbewahrt ist.

**18.** Produkt nach Anspruch 16, das mittels des Verfahrens nach irgendeinem der Ansprüche 1 bis 16 erhältlich ist.

**19.** Produkt nach einem der Ansprüche 17 oder 18, bei dem die Schokolade einen Parameter ($\tau$) von weniger als 3, vorteilhaft weniger als 2, vorteilhaft weniger als 1 aufweist, wobei der Parameter ($\tau$) durch die folgende Gleichung

(1) definiert ist:

$$\tau = (-\,[Wasser] + 0{,}37) \times F + (5{,}25 \times [Wasser] - 1{,}67\,) \times (S+SMP) + (26{,}2 \times [Wasser] - 9{,}6) \times C + (61 \times [Wasser] - 14{,}5) \times (S+SMP) \times C,$$

mit:

- [Wasser] ist der lokale freie Wassergehalt der sauren oder neutralen Milchbasis (in g/g),
- F ist der Fettgehalt der Schokolade (in g/g),
- S + SMP ist der Gehalt an Zuckern + Magermilchpulver der Schokolade (g/g),
- C ist der Gehalt an trockenem und entfettetem Kakao der Schokolade (in g/g).

**20.** Produkt nach irgendeinem der Ansprüche 17 bis 19, wobei die Schokolade ein Verhältnis DDC/(S + SMP) < 2,3, vorteilhaft weniger als 1,6, noch vorteilhafter weniger als 1 aufweist.

**21.** Produkt nach irgendeinem der Ansprüche 17 bis 20, das ein fermentiertes Milchprodukt, das lebende Fermente enthält, und insbesondere ein Joghurt ist.

**22.** Produkt nach irgendeinem der Ansprüche 17 bis 20, das eine neutrale Mousse ist.

**23.** Produkt nach irgendeinem der Ansprüche 17 bis 22, bei dem die Schicht von Schokoladestückchen an der Oberfläche des sauren oder neutralen Milchprodukts angeordnet ist.

**24.** Produkt nach irgendeinem der Ansprüche 17 bis 23, bei dem die Schicht von Schokoladestückchen mit einer Schicht eines sauren oder neutralen Milchprodukts und/oder einer wässrigen Zubereitung bedeckt ist, die ein Fruchtpüree oder Kakao enthalten kann.

**Revendications**

**1.** Méthode de production d'un produit laitier frais multicouche, acide ou neutre, comprenant au moins une couche de morceaux de chocolat, ladite méthode comprenant les étapes successives suivantes :

a) la pasteurisation du chocolat ayant une teneur en matières grasses située entre 43 % et 85 % en poids avec une force de pasteurisation $F_z$ de 6 000 min à 10 000 000 min, de manière avantageuse de 10 000 min à 500 000 min, ou mieux de 15 000 min à 100 000 min,
ou la stérilisation du chocolat ayant une teneur en matières grasses située entre 43 % et 85 % en poids ;
b) le refroidissement du chocolat pasteurisé ou stérilisé jusqu'à une température située entre 24 °C et 45 °C, de manière avantageuse entre 24 °C et 38 °C, de manière avantageuse entre 33 °C et 38 °C ;
c) dans un environnement dans lequel les micro-organismes sont filtrés, l'injection d'un flux de base laitière acide ou neutre, pasteurisé ou stérilisé, ayant une température comprise entre « son point de congélation + 1 °C » et 12 °C, de manière avantageuse entre « son point de congélation + 1 °C » et 6 °C, et d'un courant discontinu de chocolat refroidi, pasteurisé ou stérilisé, dans un pot thermoformé ou préformé décontaminé ;
d) operculage du pot contenant un produit laitier frais multicouche, acide ou neutre, contenant au moins une couche de morceaux de chocolat pasteurisé ou stérilisé ayant une concentration en matières grasses située entre 43 % et 85 % en poids, ledit produit étant conservé à une température située entre 1 °C et 10 °C pendant une période de 12 jours à six semaines.

**2.** Méthode selon la revendication 1, dans laquelle le chocolat présente un paramètre ($\tau$) inférieur à 3, de manière avantageuse inférieur à 2, de manière avantageuse inférieur à 1, le paramètre ($\tau$) étant défini par l'équation (1) suivants :

$$(\tau) = (- [eau] + 0,37) \times MG + (5,25 \times [eau] - 1,67) \times (S + PLE) + (26,2 \times [eau] - 9,6) \times C + (61 \times [eau] - 14,5) \times (S + PLE) \times C,$$

avec:

- [eau] est la teneur en eau libre locale de la base laitière acide ou neutre (en g/g),
- MG est la teneur en matières grasses du chocolat (en g/g),
- S + PLE est la teneur en sucres + poudre de lait écrémé du chocolat (g/g),
- C est la teneur en cacao sec et dégraissé du chocolat (en g/g).

3. Méthode selon la revendication 1 ou 2, dans laquelle le chocolat présente un rapport CSD/ (S + PLE) inférieur à 2,3, de manière avantageuse inférieur à 1,6, ou mieux inférieur à 1.

4. Méthode selon l'une quelconque des revendications précédentes, dans laquelle la base laitière acide est un produit fermenté contenant des ferments vivants et, en particulier, un yogourt.

5. Méthode selon l'une quelconque des revendications 1 à 3, dans laquelle la base laitière neutre est une mousse.

6. Méthode selon l'une quelconque des revendications précédentes, dans laquelle l'étape de pasteurisation (a) est réalisée à sec.

7. Méthode selon l'une quelconque des revendications précédentes, dans laquelle l'étape (b) consiste à tempérer et à refroidir le chocolat à une température située entre 24 °C et 30 °C.

8. Méthode selon l'une quelconque des revendications précédentes, dans laquelle l'étape (c) est réalisée par l'injection de la base laitière acide ou neutre dans le pot thermoformé ou préformé décontaminé, puis par l'injection d'une couche de morceaux de chocolat sur la surface de la base laitière acide ou neutre.

9. Méthode selon la revendication 8, dans laquelle l'étape (c) comprend également une étape consistant à injecter, sur la surface de la couche de morceaux de chocolat, une autre couche de base laitière acide ou neutre et/ou une couche de préparation aqueuse sucrée pouvant contenir une purée de fruits ou du cacao.

10. Méthode selon l'une quelconque des revendications 1 à 7, dans laquelle l'étape (c) est réalisée par l'injection d'une préparation aqueuse sucrée, acide ou neutre, contenant facultativement une purée de fruits ou du cacao dans le pot thermoformé ou préformé décontaminé, puis par l'injection d'une couche de morceaux de chocolat sur la surface de la préparation aqueuse sucrée, acide ou neutre, puis par l'injection d'une couche de base laitière acide ou neutre.

11. Méthode selon l'une quelconque des revendications 1 à 7, **caractérisée en ce que** l'étape (c) est réalisée par la coinjection de la base laitière acide ou neutre et du chocolat refroidi, pasteurisé ou stérilisé, de manière avantageuse au moyen d'une double « pieuvre » ayant au moins 3 buses pour le chocolat.

12. Méthode selon l'une quelconque des revendications précédentes, dans laquelle l'injection du chocolat est réalisée par spottage.

13. Méthode selon l'une quelconque des revendications précédentes, dans laquelle la plus grande dimension des morceaux de chocolat dans la couche de morceaux de chocolat est supérieure à cinq millimètres.

14. Méthode selon l'une quelconque des revendications précédentes, dans laquelle la couche de morceaux de chocolat a la forme d'une succession de grosses pépites ou de bâtonnets ou de palets ou la forme d'une grille.

15. Méthode selon l'une quelconque des revendications précédentes, dans laquelle la couche de morceaux de chocolat a une structure tridimensionnelle.

16. Méthode selon l'une quelconque des revendications précédentes, ladite méthode comprenant une étape (e) supplémentaire de refroidissement du produit obtenu dans l'étape (d) jusqu'à 4 °C, puis de stockage à une température inférieure à 10 °C, de manière avantageuse inférieure à 4 °C.

17. Produit laitier frais multicouche, acide ou neutre,

   - qui comprend au moins une couche de morceaux de chocolat, dans laquelle la plus grande dimension des morceaux de chocolat est supérieure à 5 millimètres,
   - dans lequel le chocolat est pasteurisé ou stérilisé et possède une teneur en matières grasses située entre 43 % et 85 % en poids,
   - et dans lequel le produit laitier frais multicouche, acide ou neutre, est conservé à une température située entre 1 °C et 10 °C pendant une période de 12 jours à six semaines.

18. Produit selon la revendication 16, susceptible d'être obtenu au moyen de la méthode selon l'une quelconque des revendications 1 à 16.

19. Produit selon la revendication 17 ou 18, dans lequel le chocolat présente un paramètre (τ) inférieur à 3, de manière avantageuse inférieur à 2, de manière avantageuse inférieur à 1, le paramètre (τ) étant défini par l'équation (1) suivants :

$$(\tau) = (- [eau] + 0,37) \times MG + (5,25 \times [eau] - 1,67) \times (S + PLE) + (26,2 \times [eau] - 9,6) \times C + (61 \times [eau] - 14,5) \times (S + PLE) \times C,$$

avec:

   - [eau] est la teneur en eau libre locale de la base laitière acide ou neutre (en g/g),
   - MG est la teneur en matières grasses du chocolat (en g/g),
   - S + SMP est la teneur en sucres + poudre de lait écrémé du chocolat (g/g),
   - C est la teneur en cacao sec et dégraissé du chocolat (en g/g).

20. Produit selon l'une quelconque des revendications 17 à 19, dans lequel le chocolat présente un rapport CSD/(S + PLE) inférieur à 2,3, de manière avantageuse inférieur à 1,6, ou mieux inférieur à 1.

21. Produit selon l'une quelconque des revendications 17 à 20, qui est un produit laitier fermenté contenant des ferments vivants et, en particulier, un yogourt.

22. Produit selon l'une quelconque des revendications 17 à 20, qui est une mousse neutre.

23. Produit selon l'une quelconque des revendications 17 à 22, dans lequel la couche de morceaux de chocolat est située sur la surface du produit laitier acide ou neutre.

24. Produit selon l'une quelconque des revendications 17 à 23, dans lequel la couche de morceaux de chocolat est recouverte avec une couche de produit laitier acide ou neutre et/ou une préparation aqueuse pouvant contenir une purée de fruits ou du cacao.

FIG.1

FIG.2

EP 1 824 345 B1

FIG.3

EP 1 824 345 B1

**FIGURE 4**

**FIGURE 5**

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0070960 A
- EP 770332 A
- EP 664959 A
- WO 0007456 A